# EUROPEAN PATENT SPECIFICATION

(11) **EP 0 272 018 B1**
(45) Date of publication and mention of the grant of the patent: **04.05.1994**
(21) Application number: 87310614.0
(22) Date of filing: 02.12.1987
(51) Int. Cl.: G09G 3/18, G09G 3/36

(54) **Liquid crystal display apparatus**
Flüssigkristallanzeigegerät
Appareil d'affichage à cristaux liquides

(30) Priority: 04.12.1986 JP 289334/86
(43) Date of publication of application: 22.06.1988
(73) Proprietor: SONY CORPORATION, Tokyo 141 (JP)
(72) Inventor: Tomita, Hideo c/o Patent Division, Shinagawa-ku Tokyo 141 (JP)
(74) Representative: Thomas, Christopher Hugo

(56) References cited:
- EP-A- 0 221 582
- FR-A- 2 534 052
- GB-A- 2 168 880
- US-A- 4 319 237
- NEUES AUS DER TECHNIK, nr. 2, 15. April 1981, page 1, Würzburg, DE: "Flüssigkristall-Wiedergabeanordnung"

## Description

This invention relates to liquid crystal display apparatus particularly, but not exclusively, for mounting on the rear face of a reclinable seat back, for example in a passenger aircraft or train.

A display system for use in aircraft has been proposed wherein a flat display is mounted on the rear face of the back of each seat, so that a passenger facing the display can enjoy television images or receive information. A liquid crystal panel has been proposed as a suitable flat display.

As is known, a liquid crystal display apparatus has a narrow range of allowable visual (or viewing) angle (directivity), and when it is viewed from an angular position falling outside the range, the image quality is considerably degraded. Since the seat back of a passenger seat is normally reclinable, the visual angle will change with the angle of the seat back in front of the viewer, and a degradation in image quality inevitably occurs.

Image quality can be improved to some extent by operating an adjusting control. However, each time the reclining angle of a seat is changed, the adjustment must be performed. However, if a passenger is not accustomed to doing the adjustment, he may not adjust the image quality optimally.

Copending European Patent Application EP-A-0221582 (relevant for novelty purposes only under Article 54(3) and (4) EPC) discloses a liquid crystal display for use in a mobile communications device in which the signals driving the display can be varied depending on whether or not the device is on its stand hook so as to take account of differing viewing angles.

United States Patent No. US-A-4319237 discloses a liquid crystal display in which the signals driving the display are automatically adjusted in dependence upon ambient temperature.

According to the present invention there is provided a liquid crystal display apparatus mounted, in use, on a seat having a reclinable back, the apparatus comprising:
a liquid crystal display panel on said back of said seat;
a circuit for supplying a display signal to said panel and having at least one control electrode to which control signals can be supplied to control the quality of an image displayed on said panel; characterized by
detecting means for detecting the reclining angle of said back; and thus said panel; and
at least one adder through which said detecting means adjusts the magnitude of said control signals as functions of the detected reclining angle thereby to control the quality of the displayed image.

Thus, an embodiment of the present invention may be a liquid crystal display apparatus mounted on a rear face of a passenger seat back of a line of passenger seats. The liquid crystal display apparatus comprises a detection means for detecting a screen viewing angle by detecting the reclining angle of the seat back. The display apparatus also has a circuit for changing a voltage impressed on a liquid crystal electrode in accordance with the output from thedetection means thereby to change the brightness or contrast level asa function of the reclining angle of the seat back.

The invention will now be described by way of example withreference to the accompanying drawings, in which:
Figure 1 is a circuit diagram of a liquid crystal display controlcircuit;
Figure 2 is a side view of a reclining seat;
Figure 3 is a waveform chart of a drive voltage for a liquidcrystal display; and
Figure 4 is a graph showing the relationship of the drive voltage-visual angle characteristics of a liquid crystal display panel.

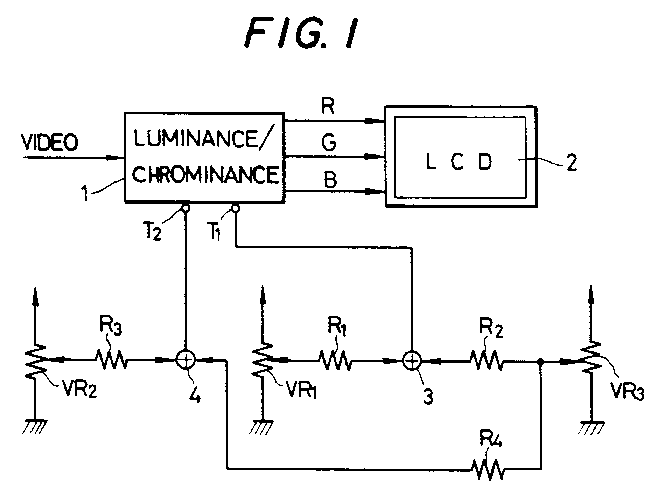

Figure 1 shows a liquid crystal display control circuit which is arranged on a rear face of a seat back and to which the present invention is applied. An input colour video signal is processed by a luminance/chrominance processing circuit 1, and is decoded into red, green and blue (R, G and B) signals. The R, G and B signals are then supplied to a liquid crystal display unit 2. The circuit 1 has control terminals T1 and T2 for a brightness control input and a contrast (picture) control input respectively. Outputs from potentiometers VR1 and VR2, which are respectively the brightness and the contrast adjusting controls are supplied to the terminals T1 and T1 through the adders 3 and 4, respectively. Therefore, the brightness and contrast of the picture can be adjusted by operating the corresponding controls.

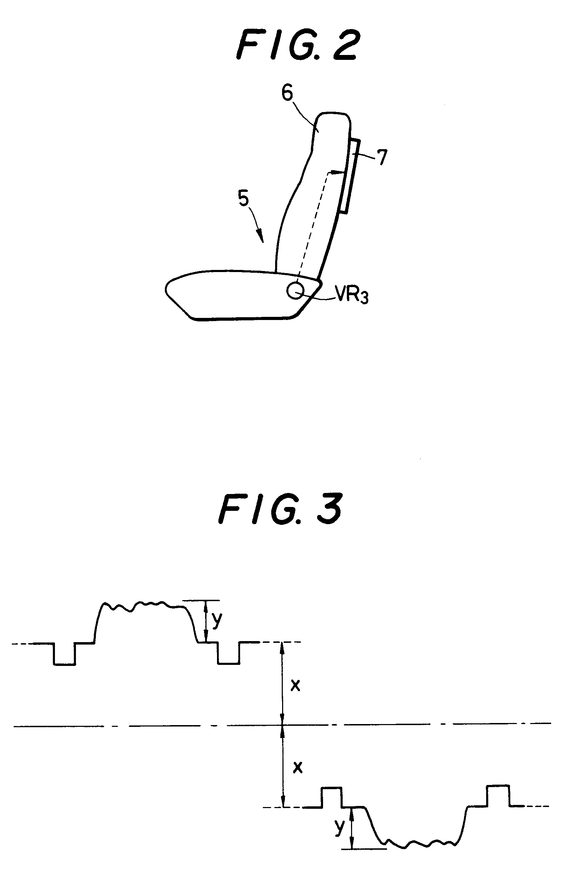

Figure 2 is a side view of a reclinable seat 5. A liquid crystal display panel 7 is mounted on the rear face of a seat back 6. A potentiometer VR3 for detecting the reclining angle is mounted on the pivoting shaft about which the seat back 6 reclines, thereby detecting the reclining angle. The potentiometers VR1, VR2 and VR3 are connected between a bias source (not shown) and earth.

Referring to Figure 1, a reclining angle output signal from the potentiometer VR3 is supplied to the terminals T1 and T2 of the circuit 1 through the adders 3 and 4. Then, if the screen visual angle changes due to a change in the reclining angle, the directivity of the display unit 2 is automatically corrected in accordance with the reclining angle, so that image quality is not substantially degraded. The relationships between the brightness and contrast adjusting control signals and the reclining angle detection control signal can be respectively determined by the proper selection of values for resistors R1, R2, R3 and R4 which are connected in series between the respective potentiometers VR1, VR2 and VR3, and the adders 3 and 4.

Figure 3 shows an AC drive waveform impressed on the opposing electrodes of the display unit 2. Drive video signals having opposite polarities are alternately impressed on the opposing electrodes at the predetermined intervals. An AC amplitude x, that is the pedestal level of the video signal, can be changed in accordance with a signal supplied to the brightness control terminal T1 of the circuit 1, and hence, the luminance level can be changed. The amplitude y of the image component of the waveform shown in Figure 3 can be changed by a signal supplied to the contrast control terminal T2 of the circuit 1, and hence, the image contrast can be changed. The luminance level and the contrast are both changed in accordance with the output from the potentiometer VR3 to perform automatic adjustment, so that the image quality is not substantially degraded even if the visual angle is changed.

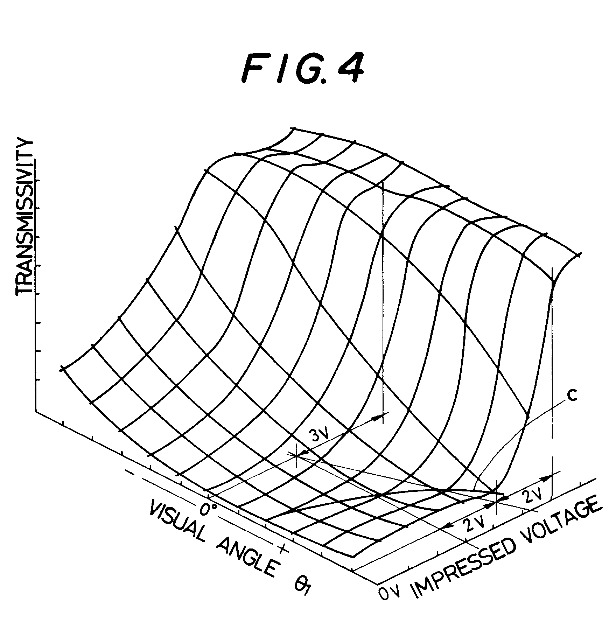

Figure 4 is a graph showing the display characteristics of a twisted nematic type liquid crystal display unit 2. A visual angle ϑ1 (an axis perpendicular to a screen surface is 0°) is plotted along the Y axis, an impressed voltage x is plotted along the X axis, and the transmissivity (luminance) of the screen is plotted along the Z axis. As can be seen from this graph, when the visual angle ϑ1 is increased, the region where the transmissivity changes linearly with respect to the impressed voltage becomes narrow, and the gradient of the voltage-transmissivity curve is also changed. For this reason, unless the impressed voltage level and the image amplitude are changed, the image quality is considerably degraded. In the region inside the bold curve C in Figure 4, the image quality is degraded due to the large visual angle, and inversion of the black and white portions of the image occurs.

Both the transmissivity and the contrast control factors as a function of the reclining angle can be determined based on Figure 4. For example, when the visual angle is 0°, the pedestal level x of the video signal shown in Figure 3 is set to be 1.5 V, and the white peak level is set to be about 4.5 V (picture amplitude $\text{v = 3 V}$ ). When the image visual angle is increased by 20° in a + direction, automatic correction is performed in accordance with the output from the potentiometer VR3 so that the pedestal level x is set to 3.5 V, and the white peak level is set to be 5.5 V (picture amplitude $\text{y = 2 V}$ 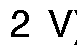 ). Thus, black-white inversion of the image can be prevented. In addition, the linear region of the impressed voltage-transmissivity characteristics is corrected so as to prevent degradation such as white or black flat painting.

## Claims

1. A liquid crystal display apparatus mounted, in use, on a passenger seat (5) having a reclinable back (6), the apparatus comprising:
a liquid crystal display panel (7) on said back (6) of said seat (5);
a circuit (1) for supplying a display signal to said panel (7) and having at least one control electrode (T1, T2) to which control signals can be supplied to control the quality of an image displayed on said panel (7); characterized by
detecting means (VR3) for detecting the reclining angle of said back (6); and thus said panel (7); and
at least one adder (3, 4) through which said detecting means (VR3) adjusts the magnitude of said control signals as functions of the detected reclining angle thereby to control the quality of the displayed image.

2. A liquid crystal display apparatus as claimed in claim 1, wherein said control electrode (T1) controls the brightness of said image and said detecting means (VR3) includes a potentiometer (VR3) mechanically coupled between a base of said seat (5) and said back (6) such that, when said back (6) is reclined from a first position to a second position, said potentiometer (VR3) supplies a control voltage to said control electrode (T1), said control voltage varying in accordance with said reclining angle thereby automatically to adjust the brightness of the displayed image on said panel (7).

3. A liquid crystal display apparatus as claimed in claim 1, wherein said control electrode (T2) controls the contrast of said image and said detecting means (VR3) includes a potentiometer (VR3) mechanically coupled between a base of said seat (5) and said back (6) such that, when said back (6) is reclined from a first position to a second position, said potentiometer (VR3) supplies a control voltage to said control electrode (T2), said control voltage varying in accordance with said reclining angle thereby automatically to adjust the contrast of the displayed image on said panel (7).

4. A liquid crystal display apparatus as claimed in claim 1, wherein the contrast and brightness of said panel (7) are controllable in response to external control voltages from external control means (VR1, VR2) through respective inputs of said adders, said detecting means (VR3) including a potentiometer (VR3) which supplies other control voltages to said circuit (1) through other inputs of said adders.

5. A liquid crystal display apparatus as claimed in any one of claims 2 and 4, wherein said display signal is a colour video signal having a pedestal level and said detecting means (VR3) controls said pedestal level.

6. A liquid crystal display apparatus as claimed in any one of claims 3 and 4, wherein said display signal is a colour video signal and said variable means (VR3) controls the amplitude of said colour video signal.

## Patentansprüche

1. Bei Gebrauch an einen Passagiersitz (5) mit verstellbarer Rückenlehne (6) angebrachtes Flüssigkristallanzeigegerät
mit einem Flüssigkristallbildschirm (7) an der Rückenlehne (6) des Sitzes (5),
und mit einer Schaltung (1), die dem Bildschirm (7) ein Bildsignal zuführt und mindestens eine Regelelektrode (T1, T2) aufweist, der zur Regelung der Qualität des auf dem Bildschirm (7) dargestellten Bildes Regelsignale zugeführt werden können,
**gekennzeichnet durch**
eine Erfassungseinrichtung (VR3) zur Erfassung des Neigungswinkels der Rückenlehne (6) und damit des Bildschirms (7)
und mindestens ein Addierglied (3, 4), mit dessen Hilfe die Erfassungseinrichtung (VR3) als Funktion des erfaßten Neigungswinkels die Höhe der Regelsignale einstellt und so die Qualität des dargestellten Bildes regelt.

2. Flüssigkristallanzeigegerät nach Anspruch 1, wobei die Regelelektrode (T1) die Helligkeit des Bildes regelt und die Erfassungseinrichtung (VR3) ein Potentiometer (VR3) enthält, welches mechanisch so mit dem Unterteil des Sitzes (5) und der Rückenlehne (6) verbunden ist, daß es der Regelelektrode (T1) bei Verstellen der Rückenlehne (6) aus einer ersten Position in eine zweite Position eine Regelspannung zuführt, die sich dadurch entsprechend dem Neigungswinkel automatisch ändert und so die Helligkeit des am Bildschirm (7) dargestellten Bildes einstellt.

3. Flüssigkristallanzeigegerät nach Anspruch 1, wobei die Regelelektrode (T2) den Kontrast des Bildes regelt und die Erfassungseinrichtung (VR3) ein Potentiometer (VR3) enthält, welches mechanisch so mit dem Unterteil des Sitzes (5) und der Rückenlehne (6) verbunden ist, daß es der Regelelektrode (T2) bei Verstellen der Rückenlehne (6) aus einer ersten Position in eine zweite Position eine Regelspannung zuführt, die sich dadurch entsprechend dem Neigungswinkel automatisch ändert und so den Kontrast des am Bildschirm (7) dargestellten Bildes einstellt.

4. Flüssigkristallanzeigegerät nach Anspruch 1, wobei Kontrast und Helligkeit des Bildschirms (7) über entsprechende Eingänge der Addierglieder durch von externen Regeleinrichtungen (VR1, VR2) gelieferte externe Regelspannungen regelbar sind, und wobei die Erfassungseinrichtung (VR3) ein Potentiometer (VR3) enthält, welches der Schaltung (1) über andere Eingänge der Addierglieder andere Regelspannungen zuführt.

5. Flüssigkristallanzeigegerät nach irgendeinem der Ansprüche 2 und 4, wobei das Bildsignal ein Farbvideosignal mit einem Schwarzwertpegel ist und die Erfassungseinrichtung (VR3) den Schwarzwertpegel regelt.

6. Flüssigkristallanzeigegerät nach irgendeinem der Ansprüche 3 und 4, wobei das Bildsignal ein Farbvideosignal ist und die Erfassungseinrichtung (VR3) die Amplitude des Farbvideosignals regelt.

## Revendications

1. Dispositif d'affichage à cristaux liquides monté en utilisation sur un siège de passager (5) possédant un dossier inclinable (6), dispositif comprenant :
- un panneau d'affichage à cristaux liquides (7) sur ledit dossier (6) dudit siège (5);
- un circuit (1) pour fournir un signal d'affichage audit panneau (7) et possédant au moins une électrode de commande (T1, T2) pouvant recevoir des signaux de commande de la qualité d'une image affichée sur ledit panneau (7);
dispositif caractérisé par un moyen de détection (VR3) pour la détection de l'angle d'inclinaison dudit dossier (6) et ainsi dudit panneau (7) et au moins un additionneur (3, 4) à travers lequel ledit moyen de détection (VR3) règle l'amplitude desdits signaux de commande en fonction de l'angle d'inclinaison détecté afin de commander ainsi la qualité de l'image affichée.

2. Dispositif d'affichage à cristaux liquides selon la revendication 1, dans lequel ladite électrode de commande (T1) commande la luminosité de ladite image et ledit moyen de détection (VR3) comprend un potentiomètre (VR3) couplé, de façon mécanique, entre une base dudit siège (5) et ledit dossier (6) de telle façon que, lorsque ledit dossier (6) est incliné d'une première position vers une seconde position, ledit potentiomètre (VR3) fournisse une tension de commande à ladite électrode de commande (T1), ladite tension de commande variant selon ledit angle d'inclinaison afin de régler, de façon automatique, la luminosité de l'image affichée sur ledit panneau (7).

3. Dispositif d'affichage à cristaux liquides selon la revendication 1, dans lequel ladite électrode de commande (T2) commande le contraste de ladite image et ledit moyen de détection (VR3) comprend un potentiomètre (VR3) couplé, de façon mécanique, entre une base dudit siège (5) et ledit dossier (6) de telle façon que, lorsque ledit dossier (6) est incliné d'une première position vers une seconde position, ledit potentiomètre (VR3) fournisse une tension de commande à ladite électrode de commande (T2), ladite tension de commande variant selon ledit angle d'inclinaison afin de régler, de façon automatique, le contraste de l'image affichée sur ledit panneau (7).

4. Dispositif d'affichage à cristaux liquides selon la revendication 1, dans lequel le contraste et la luminosité dudit panneau (7) peuvent être commandés en réponse à des tensions externes de commande à partir de moyens de commande externes (VR1, VR2) via des entrées respectives desdits additionneurs, ledit moyen de détection (VR3) comprenant un potentiomètre (VR3) fournissant d'autres tensions de commande audit circuit (1) via d'autres entrées desdits additionneurs.

5. Dispositif d'affichage à cristaux liquides selon l'une quelconque des revendications 2 et 4, dans lequel ledit signal d'affichage est un signal vidéo couleur possédant un niveau de base et ledit moyen de détection (VR3) commande ledit niveau de base.

6. Dispositif d'affichage à cristaux liquides selon l'une quelconque des revendications additionneurs 3 et 4, dans lequel ledit signal d'affichage est un signal vidéo couleur et ledit moyen variable (VR3) commande l'amplitude dudit signal vidéo couleur.
